(19) Europäisches Patentamt
European Patent Office
Office européen des brevets

(11) Publication number: **0 231 019 B1**

# (12) EUROPEAN PATENT SPECIFICATION

(45) Date of publication of patent specification: **24.04.91 Bulletin 91/17**

(51) Int. Cl.$^5$: **C01B 33/34**, C01B 33/20, C01B 35/12, C01G 17/00, C01G 49/00, B01J 29/04

(21) Application number: **87101101.1**

(22) Date of filing: **27.01.87**

## (54) New zeolite SSZ-24.

(30) Priority: **29.01.86 US 823704**

(43) Date of publication of application: **05.08.87 Bulletin 87/32**

(45) Publication of the grant of the patent: **24.04.91 Bulletin 91/17**

(84) Designated Contracting States: **BE DE FR GB IT NL**

(56) References cited: **US-A- 4 544 538**

(73) Proprietor: **CHEVRON RESEARCH COMPANY
555 Market Street
San Francisco California 94120 (US)**

(72) Inventor: **Zones, Stacey I.
1874-9th Avenue
San Francisco, CA 94122 (US)**

(74) Representative: **Patentanwälte Müller-Boré, Deufel, Schön, Hertel, Lewald, Otto
Postfach 26 02 47 Isartorplatz 6
W-8000 München 26 (DE)**

**EP 0 231 019 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### BACKGROUND OF THE INVENTION

Natural and synthetic zeolitic crystalline aluminosilicates are useful as catalysts and adsorbents. These aluminosilicates have distinct crystal structures which are demonstrated by X-ray diffraction. The crystal structure defines cavities and pores which are characteristic of the different species. The adsorptive and catalytic properties of each crystalline aluminosilicate are determined in part by the dimensions of its pores and cavities. Thus, the utility of a particular zeolite in a particular application depends at least partly on its crystal structure.

Because of their unique molecular sieving characteristics, as well as their catalytic properties, crystalline aluminosilicates are especially useful in such applications as gas drying and separation and hydrocarbon conversion. Although many different crystalline aluminosilicates and silicates have been disclosed, there is a continuing need for new zeolites and silicates with desirable properties for gas separation and drying, hydrocarbon and chemical conversions, and other applications.

Crystalline aluminosilicates are usually prepared from aqueous reaction mixtures containing alkali or alkaline earth metal oxides, silica, and alumina. "Nitrogenous zeolites" have been prepared from reaction mixtures containing an organic templating agent, usually a nitrogen-containing organic cation. By varying the synthesis conditions and the composition of the reaction mixture, different zeolites can be formed using the same templating agent. Use of N,N,N-trimethyl cyclopentyl-ammonium iodide in the preparation of Zeolite SSZ-15 molecular sieve is disclosed in the US-Patent 4 610 854. Use of 1-azoniaspiro [4.4] nonyl bromide and N,N,N-trimethyl neopentylammonium iodide in the preparation of a molecular sieve termed "Losod" is disclosed in Helv. Chim. Acta (1974) ; Vol. 57, page 1533 (W. Sieber and W. M. Meier) ; use of quinuclidinium compounds to prepare a zeolite termed "NU-3" is disclosed in European Patent Publication No. 40016 ; use of 1,4-di(1-azoniabicyclo [2.2.2.]octane) lower alkyl compounds in the preparation of Zeolite SSZ-16 molecular sieve is disclosed in U.S. Patent No. 4,508,837 ; use of N,N,N-trialkyl-1-adamantamine in the preparation of zeolite SSZ-13 molecular sieve is disclosed in U.S. Patent No. 4,544,538.

### SUMMARY OF THE INVENTION

Object of the present invention is the provision of a new family of crystalline alumino-silicate molecular sieves with unique properties. This molecular sieves are referred too herein as "Zeolite SSZ-24" or simply "SSZ-24". Additionally by the invention is provided a highly effective method for preparing SSZ-24.

SSZ-24 has a mole ratio of an oxide selected from silicon oxide, germanium oxide, and mixtures thereof to an oxide selected from aluminum oxide, gallium oxide, iron oxide, boron oxide and mixtures thereof greater than about 100 : 1 and having the X-ray diffraction lines of Table 1 below. The zeolite further has a composition, as synthesized and in the anhydrous state, in terms of mole ratios of oxides as follows : (0.1 to 10)($Q_2O$ : (0.1 to 5.0)$M_2O$ : $W_2O_3$ : (greater than 100)$YO_2$ wherein M is an alkali metal cation, W is selected from aluminum, gallium, iron, boron and mixtures thereof, Y is selected from silicon, germanium and mixtures thereof, and Q is an adamantane quaternary ammonium ion. SSZ-24 zeolites can have a $YO_2$ : $W_2O_3$ mole ratio greater than about 100 : 1 and can be made essentially alumina free. As prepared, the silica : alumina mole ratio is typically in the range of 100 : 1 to about 10,000 : 1. Higher mole ratios can be obtained by treating the zeolite with chelating agents or acids to extract aluminum from the zeolite lattice. The silica : alumina mole ratio can also be increased by using silicon and carbon halides and other similar compounds. Preferably, SSZ-24 is an aluminosilicate wherein W is aluminum and Y is silicon.

By "essentially alumina-free" as used herein, refers to silicaceous crystalline molecular sieves wherein any alumina is present as an impurity in the starting materials but for the impurity would not be present in the silicate.

The novel zeolites of the present invention are characterised by having a mole ratio of an oxide selected from silicon oxide, germanium oxide and mixtures thereof to an oxide selected from aluminium oxide, gallium oxide, iron oxide, boron oxide and mixtures thereof greater than 100 : 1, and having a crystalline structure whose X-ray powder diffraction pattern shows the following characteristic lines :

| 2 θ | d/n | I (Intensity) |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

The invention also involves a method for preparing SSZ-24 Zeolites, comprising :
(a) preparing an aqueous mixture containing sources of an alkali metal oxide, an adamantane quaternary ammonium ion wherein the adamantane quaternary ammonium ion is derived from an adamantane compound of the formula :

(a) 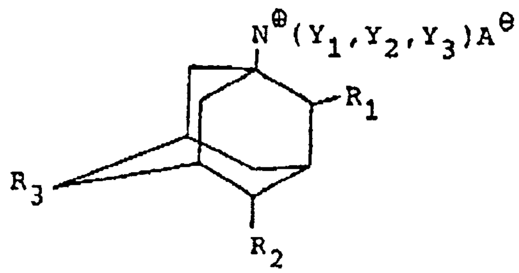

wherein each of $Y_1$, $Y_2$ and $Y_3$ independently is lower alkyl and $A^{\ominus}$ is an anion which is not detrimental to the formation of the zeolite ; and each of $R_1$, $R_2$ and $R_3$ independently is hydrogen, or lower alkyl ; or

(b) 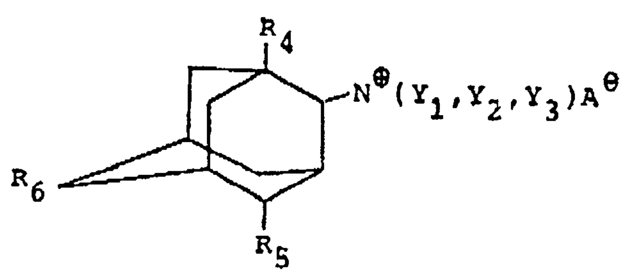

wherein each of $R_4$, $R_5$ and $R_6$ independently is hydrogen or lower alkyl ; each of $Y_1$, $Y_2$ and $Y_3$ independently is lower alkyl ; and $A^{\ominus}$ is an anion which is not detrimental to the formation of the zeolite, an oxide selected from aluminum oxide, gallium oxide, iron oxide, boron oxide and mixtures thereof, and an oxide selected from silicon oxide, germanium oxide, and mixtures thereof wherein the reaction mixture has a composition in terms of mole ratios of oxides falling in the ranges :

| | |
|---|---|
| $YO_2/W_2O_3$ | 50-∞ |
| $OH^-/YO_2$ | 0.10-1.0 |
| $Q/YO_2$ | 0.05-0.50 |
| $M^+/YO_2$ | 0.05-0.30 |
| $H_2O/YO_2$ | 20-300 |
| $Q/Q+M^+$ | 0.30-0.70 ; |

wherein Q is an adamantane quaternary ammonium ion, Y is silicon, germanium and mixtures thereof, W is aluminum, gallium, iron, boron and mixtures thereof, and M is an alkali metal ;

(b) maintaining the mixture at a temperature of at least 140°C until the crystals of said zeolite form ; and

(c) recovering said crystals.

## DETAILED DESCRIPTION OF THE INVENTION

SSZ-24 zeolites, as synthesized, have a crystalline structure whose X-ray powder diffraction pattern shows the following characteristic lines :

Table 1

| 2 θ | d/n | $I/I_o$ |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

Typical SSZ-24 aluminosilicate zeolites have the X-ray diffraction pattern of Tables 2 and 4 below.

The X-ray powder diffraction patterns were determined by standard techniques. The radiation was the K-alpha/doublet of copper and a scintillation counter spectrometer wits a strip-chart pen recorder was used. The peak heights I and the positions, as a function of 2 θ where θ is the Bragg angle, were read from the spectrometer chart. From these measured values, the relative intensities, $100I/I_0$, where $I_0$ is the intensity of the strongest line or peak, and d, the interplanar spacing in Angstroms corresponding to the recorded lines, can be calculated. The X-ray diffraction pattern of Table 1 is characteristic of SSZ-24 zeolites. The zeolite produced by exchanging the metal or other cations present in the zeolite with various other cations yields substantially the same diffraction pattern although there can be minor shifts in interplanar spacing and minor variations in relative intensity. Minor variations in the diffraction pattern can also result from variations in the organic compound used in the preparation and from variations in the silica-to-alumina mole ratio from sample to sample. Calcination can also cause minor shifts in the X-ray diffraction pattern. Notwithstanding these minor perturbations, the basic crystal lattice structure remains unchanged.

SSZ-24 zeolites can be suitably prepared from an aqueous solution containing sources of an alkali metal oxide, an adamantane quaternary ammonium ion, an oxide of aluminum, gallium, iron, boron or mixtures thereof, and an oxide of silicon or germanium, or mixture of the two. The reaction mixture should have a composition in terms of mole ratios falling within the following ranges :

| | Broad | Preferred |
|---|---|---|
| $YO_2/W_2O_3$ | 50- ∞ | |
| $OH^-/YO_2$ | 0.10-1.0 | 0.20-0.30 |
| $Q/YO_2$ | 0.05-0.50 | 0.10-0.20 |
| $M^+/YO_2$ | 0.05-0.30 | 0.05-0.15 |
| $H_2O/YO_2$ | 20-300 | 35-60 |
| $Q/Q+M^+$ | 0.30-0.70 | 0.40-0.60 |

wherein Q is an adamantane quaternary ammonium ion, Y is silicon, germanium or both, and W is aluminum, gallium, iron, boron or mixtures thereof. M is an alkali metal, preferably sodium or potassium. The organic adamantane compound which acts as a source of the adamantane quaternary ammonium ion employed can provide hydroxide ion.

When using the adamantane quaternary ammonium hydroxide compound as a template, it has also been found that purer forms of SSZ-24 are prepared when there is an excess of adamantane compound present relative to the amount of alkali metal hydroxide and that when the $OH^-/SiO_2$ molar ratio is greater than 0.40, then $M^+/SiO_2$ molar ratio should be less than 0.20.

The adamantane quaternary ammonium ion component Q, of the crystallization mixture, is derived from an adamantane quaternary ammonium compound. Preferably, the adamantane quaternary ammonium ion is derived from a compound of the formula

(a)

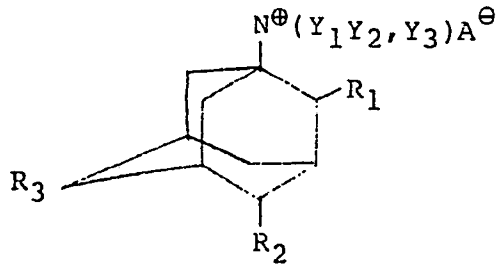

wherein each of $Y_1$ $Y_2$ and $Y_3$ independently is lower alkyl and most preferably methyl ; $A^{\ominus}$ is an anion which is not detrimental to the formation of the zeolite ; and each of $R_1$, $R_2$, and $R_3$ independently is hydrogen, or lower alkyl and most preferably hydrogen ; and

(b)

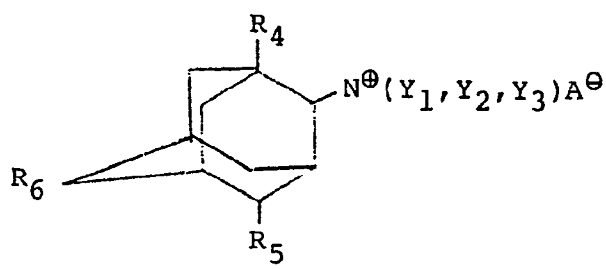

wherein each of $R_4$, $R_5$ and $R_6$ independently is hydrogen or lower alkyl ; and most preferably hydrogen ; each of $Y_1$, $Y_2$ and $Y_3$ independently is lower alkyl and most preferably methyl ; and $A^{\ominus}$ is an anion which is not detrimental to the formation of the zeolite ;

The adamantane quaternary ammonium compounds are prepared by methods known in the art.

By "lower alkyl" is meant alkyl of from about 1 to 5 carbon atoms.

$A^{\ominus}$ is an anion which is not detrimental to the formation of the zeolite. Representative of the anions include halogen, e.g., fluoride, chloride, bromide and iodide, hydroxide, acetate, sulfate, carboxylate, etc. Hydroxide is the most preferred anion. It may be beneficial to ion-exchange, for example, the halide for hydroxide ion, thereby reducing or eliminating the alkali metal hydroxide quantity required.

The reaction mixture is prepared using standard zeolitic preparation techniques. Typical sources of aluminum oxide for the reaction mixture include aluminates, alumina, and aluminum compounds such as $AlCl_3$ and $Al_2(SO_4)_3$. Typical sources of silicon oxide include silicates, silica hydrogel, silicic acid, colloidal silica, tetraalkyl orthosilicates, and silica hydroxides. Gallium, iron, boron and germanium can be added in forms corresponding to their aluminum and silicon counterparts. Salts, particularly alkali metal halides such as sodium chloride, can be added to or formed in the reaction mixture. They are disclosed in the literature as aiding the crystallization of zeolites while preventing silica occlusion in the lattice.

The reaction mixture is maintained at an elevated temperature until the crystals of the zeolite are formed. The temperatures during the hydrothermal crystallization step are typically maintained from about 140°C to about 200°C, preferably from about 150°C to about 170°C and most preferably from about 135°C to about 165°C. The crystallization period is typically greater than 1 day and preferably from about 3 days to about 7 days.

The hydrothermal crystallization is conducted under pressure and usually in an autoclave so that the reaction mixture is subject to autogenous pressure. The reaction mixture can be stirred during crystallization.

Once the zeolite crystals have formed, the solid product is separated from the reaction mixture by standard mechanical separation techniques such as filtration. The crystals are water-washed and then dried, e.g., at 90°C to 150°C for from 8 to 24 hours, to obtain the as synthesized, SSZ-24 zeolite crystals. The drying step can be performed at atmospheric or subatmospheric pressures.

During the hydrothermal crystallization step, the SSZ-24 crystals can be allowed to nucleate spontaneously from the reaction mixture. The reaction mixture can also be seeded with SSZ-24 crystals both to direct, and accelerate the crystallization, as well as to minimize the formation of undesired aluminosilicate contaminants. If the reaction mixture is seeded with SSZ-24 crystals, the concentration of the organic compound can be greatly reduced or eliminated, but it is preferred to have some organic compound present, e.g., an alcohol.

The synthetic SSZ-24 zeolites can be used as synthesized or can be thermally treated (calcined). Usually, it is desirable to remove the alkali metal cation by ion exchange and replace it with hydrogen, ammonium, or any desired metal ion. The zeolite can be leached with chelating agents, e.g., EDTA or dilute acid solutions, to increase the silica : alumina mole ratio. The zeolite can also be steamed ; steaming helps stabilize the crystalline lattice to attack from acids. The zeolite can be used in intimate combination with hydrogenating components, such as tungsten, vanadium, molybdenum, rhenium, nickel, cobalt, chromium, manganese, or a noble metal, such as palladium or platinum, for those applications in which a hydrogenation-dehydrogenation function is desired. Typical replacing cations can include metal cations, e.g., rare earth, Group IIA and Group VIII metals, as well as their mixtures. Of the replacing metallic cations, cations of metals such as rare earth, Mn, Ca, Mg, Zn, Cd, Pt, Pd, Ni, Co, Ti, Al, Sn, Fe and Co are particularly preferred.

The hydrogen, ammonium, and metal components can be exchanged into the zeolite. The zeolite can also be impregnated with the metals, or, the metals can be physically intimately admixed with the zeolite using standard methods known to the art. And, the metals can be occluded in the crystal lattice by having the desired metals present as ions in the reaction mixture from which the SSZ-24 zeolite is prepared.

Typical ion exchange techniques involve contacting the synthetic zeolite with a solution containing a salt of the desired replacing cation or cations. Although a wide variety of salts can be employed, chlorides and other halides, nitrates, and sulfates are particularly preferred. Representative ion exchange techniques are disclosed in a wide variety of patents including U.S. Nos. 3,140,249 ; 3,140,251 ; and 3,140,253. Ion exchange can take place either before or after the zeolite is calcined.

Following contact with the salt solution of the desired replacing cation, the zeolite is typically washed with water and dried at temperatures ranging from 65°C to about 315°C. After washing, the zeolite can be calcined in air or inert gas at temperatures ranging from about 200°C to 820°C for periods of time ranging from 1 to 48 hours, or more, to produce a catalytically active product especially useful in hydrocarbon conversion processes.

Regardless of the cations present in the synthesized form of the zeolite, the spatial arrangement of the atoms which form the basic crystal lattice of the zeolite remains essentially unchanged. The exchange of cations has little, if any, effect on the zeolite lattice structures.

The SSZ-24 aluminosilicate can be formed into a wide variety of physical shapes. Generally speaking, the zeolite can be in the form of a powder, a granule, or a molded product, such as extrudate having particle size sufficient to pass through a 2-mesh (Tyler) screen and be retained on a 400-mesh (Tyler) screen. In cases where the catalyst is molded, such as by extrusion with an organic binder, the aluminosilicate can be extruded before drying, or, dried or partially dried and then extruded.The zeolite can be composited with other materials resistant to the temperatures and other conditions employed in organic conversion processes. Such matrix materials include active and inactive materials and synthetic or naturally occurring zeolites as well as inorganic materials such as clays, silica and metal oxides. The latter may occur naturally or may be in the form of gelatinous precipitates, sols, or gels, including mixtures of silica and metal oxides. Use of an active material in conjunction wits the synthetic zeolite, i.e., combined with it, tends to improve the conversion and selectivity of the catalyst

in certain organic conversion processes. Inactive materials can suitably serve as diluents to control the amount of conversion in a given process so that products can be obtained economically without using other means for controlling the rate of reaction. Frequently, zeolite materials have been incorporated into naturally occurring clays, e.g., bentonite and kaolin. These materials, i.e., clays, oxides, etc., function, in part, as binders for the catalyst. It is desirable to provide a catalyst having good crush strength, because in petroleum refining the catalyst is often subjected to rough handling. This tends to break the catalyst down into powders which cause problems in processing.

Naturally occurring clays which can be composited with the synthetic zeolites of this invention include the montmorillonite and kaolin families, which families include the sub-bentonites and the kaolins commonly known as Dixie, McNamee, Georgia and Florida clays or others in which the main mineral constituent is halloysite, kaolinite, dickite, nacrite, or anauxite. Fibrous clays such as sepiolite and attapulgite can also be used as supports. Such clays can be used in the raw state as originally mined or can be initially subjected to calcination, acid treatment or chemical modification.

In addition to the foregoing materials, the SSZ-24 zeolites can be composited with porous matrix materials and mixtures of matrix materials such as silica, alumina, titania, magnesia, silica : alumina, silica-magnesia, silica-zirconia, silica-thoria, silica-beryllia, silica-titania, titania-zirconia as well as ternary compositions such as silica-alumina-thoria, silica-alumina-zirconia, silica-alumina-magnesia and silica-magnesia-zirconia. The matrix can be in the form of a cogel.

The SSZ-24 zeolites can also be composited with other zeolites such as synthetic and natural faujasites (e.g., X and Y), erionites, and mordenites. They can also be composited with purely synthetic zeolites such as those of the ZSM series. The combination of zeolites can also be composited in a porous inorganic matrix.

SSZ-24 zeolites are useful in hydrocarbon conversion reactions. Hydrocarbon conversion reactions are chemical and catalytic processes in which carbon containing compounds are changed to different carbon containing compounds. Examples of hydrocarbon conversion reactions include catalytic cracking, hydrocracking, and olefin and aromatics formation reactions. The catalysts are useful in other petroleum refining and hydrocarbon conversion reactions such as isomerizing n-paraffins and naphthenes, polymerizing and oligomerizing olefinic or acetylenic compounds such as isobutylene end butene-1, reforming, alkylating, isomerizing polyalkyl substituted aromatics (e.g., ortho xylene), and disproportionating aromatics (e.g., toluene) to provide mixtures of benzene, xylenes and higher methylbenzenes. The SSZ-24 catalysts have high selectivity, and under hydrocarbon conversion conditions can provide a high percentage of desired products relative to total products.

SSZ-24 zeolites can be used in processing hydrocarbonaceous feedstocks. Hydrocarbonaceous feedstocks contain carbon compounds and can be from many different sources, such as virgin petroleum fractions, recycle petroleum fractions, shale oil, liquefied coal, tar sand oil, and, in general, can be any carbon containing fluid susceptible to zeolitic catalytic reactions. Depending on the type of processing the hydrocarbonaceous feed is to undergo, the feed can contain metal or be free of metals, it can also have high or low nitrogen or sulfur impurities. It can be appreciated, however, that in general processing will be more efficient (and the catalyst more active) the lower the metal, nitrogen, and sulfur content of the feedstock.

The conversion of hydrocarbonaceous feeds can take place in any convenient mode, for example, in fluidized bed, moving bed, or fixed bed reactors depending on the types of process desired. The formulation of the catalyst particles will vary depending on the conversion process and method of operation.

Other reactions which can be performed using the catalyst of this invention containing a metal, e.g., platinum, include hydrogenation-dehydrogenation reactions, denitrogenation and desulfurization reactions.

SSZ-24 can be used in hydrocarbon conversion reactions with active or inactive supports, with organic or inorganic binders, and with and without added metals. These reactions are well known to the art, as are the reaction conditions.

SSZ-24 can also be used as an adsorbent, as a filler in paper, paint, and toothpastes, and as a watersoftening agent in detergents.

The following examples illustrate the preparation of SSZ-24.

## EXAMPLES

### Example 1

Preparation of N,N,N-Trimethyl-1-adamantanammonium Hydroxide (Template A)

Ten (10) grams of 1-adamantanamine (Aldrich) was dissolved in a mixture of 29 gms tributylamine and 60 mls dimethylformamide. The mixture was chilled in an ice bath.

28.4 Grams of methyl iodide were added dropwise to the chilled solution with continuous stirring. After several hours crystals appear. The reaction was continued overnight and allowed to come to room temperature. The crystals were filtered and washed with tetrahydrofuran and then diethyl ether before vacuum drying. Additional product was obtained by adding enough diethyl ether to the reaction filtrate to produce two phases and then with vigorous stirring acetone was added until the solution just became one phase. Continued stirring produced crystallization at which time the solution can be chilled to induce further crystallization. The product has a melting point near 300°C (decomp.) and the elemental analyses and NMR are consistent with the known structure. The vacuumdried iodide salt was then ion-exchanged with ion-exchange resin AG 1 × 8 (in molar excess) to the hydroxide form. The exchange was performed over a column or more preferably by overnight stirring of the resin beads and the iodide salt in an aqueous solution designed to give about a 0.5 molar solution of the organic hydroxide. This produces Template A.

Example 2

A reaction solution was formed from mixing the following reagents. 0.13 Grams of KOH(s) was dissolved in 11.6 ml $H_2O$ containing an additional 4.2 gms of Template A (0.71 M) solution. 1.20 gms of Cabosil M5 was added with stirring. A pea-shaped TEFLON®-coated stir bar was used and kept in the vessel during reaction. The synthetic reaction was carried out in a Parr 4745 reactor at 160°C for 6 days. The reactor was mounted onto a spit in a Blue M oven and rotated at 30 RPM. After cooling the reactor, the contents were poured into a filter and washed repeatedly with distilled water. After drying the sample in air and then at 100°C, the product was examined by X-ray diffraction (XRD) and found to be zeolite SSZ-24. The X-ray diffraction pattern for this product is given in Table 2 below.

Table 2

| 2 θ | d/n | I (Intensity) |
|---|---|---|
| 7.50 | 11.79 | 82 |
| 13.00 | 6.81 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

The X-ray diffraction pattern for SSZ-24 and AlPO-5 are essentially the same. Unit cell parameters for SSZ-24 and AlPO-5 are given below in Table 3.

Table 3

| | AlPO-5 | SSZ-24 As Prepared | SSZ-24 Calcined |
|---|---|---|---|
| a = | 13.726 | 13.62 | 13.62 |
| c = | 8.484 | 8.296 | 8.324 |

Example 3

A reaction was set up as in Example 2. But in this instance, seeds of the product of Example 2 were added

and the reaction was carried out as before but without agitation. The product upon analogous workup and analysis was about 80% SSZ-24 with the remainder being a layered silica related to Kenyaiite and a small quantity of zeolite SSZ-23.

Example 4

In this example aluminum was incorporated into the framework of the zeolite. A reaction mixture was put together as in Example 2. This time 0.06 gms of $Al_2(SO4)_3$ * 18 $H_2O$ was also added to the reaction. Care was taken to obtain good dispersion of the aluminum upon mixing so that aluminum-rich gradients are minimized. The $SiO_2/Al_2O_3$ ratio in the synthesis mixture was 200. The crystalline products obtained from carrying out the reaction as in Example 2 are SSZ-24 (major component) and the Kenyaiite-like phase (minor component).

Example 5

The crystalline products of examples 2 and 4 were subjected to calcination as follows. The samples were heated in a muffle furnace from room temperature up to 540°C at a steadily increasing rate over a 7-hour period. The samples were maintained at 540°C for four more hours and then taken up to 600°C for an additional four hours. A 50/50 mixture of air and nitrogen was passed over the zeolite at a rate of 20 standard cubic feet per minute during heating. The calcined product of Example 2 had the X-ray diffraction lines indicated in Table 4 below.

Table 4

| 2 θ | d/n | I (Intensity) |
|---|---|---|
| 7.50 | 11.79 | 200 |
| 12.98 | 6.82 | 35 |
| 15.00 | 5.91 | 17 |
| 19.89 | 4.46 | 68 |
| 21.35 | 4.16 | 27 |
| 22.60 | 3.93 | 71 |
| 25.08 | 3.55 | 2 |
| 26.13 | 3.41 | 40 |
| 29.32 | 3.05 | 12 |
| 30.27 | 2.953 | 45 |
| 34.00 | 2.637 | 4 |
| 34.82 | 2.576 | 20 |
| 37.35 | 2.408 | 3 |
| 38.21 | 2.355 | 6 |

Example 6

Ion-exchange of the calcined materials from Example 5 was carried out using $NH_4NO_3$ to convert the zeolites from its K form to NH4 and then eventually H form. Typically the same mass of $NH_4NO_3$ as zeolite was slurried into $H_2O$ at ratio of 50/1 $H_2O$ to zeolite. The exchange solution was heated at 100°C for two hours and then filtered. This process was repeated four times. Finally, after the last exchange the zeolite was washed several times with $H_2O$ and dried. A repeat calcination as in Example 5 was carried out but without the final treatment at 600°C. This produces the H form of the zeolites. The surface area for this material was 300 $m^2$/gm. The micro pore volume was 0.12 cc/gm as determined by BET method with $N_2$ as absorbate.

Example 7

Constraint Index Determination

0.25 Grams of the hydrogen form of the zeolite of Example 4 (after treatment according to Examples 5 and

6) was packed into a 9,5 mm stainless steel tube with alundum on both sides of the zeolite bed. A Lindburg furnace was used to heat the reactor tube. Helium was introduced into the reactor tube at 10 cc/min. and atmospheric pressure. The reactor was taken to 121°C for 40 min. and then raised to 427°C. Once temperature equilibration was achieved a 50/50, w/w feed of n-hexane and 3-methylpentane was introduced into the reactor at a rate of 0.62 cc/hr. Feed delivery was made via syringe pump. Direct sampling onto a gas chromatograph begun after 10 minutes of feed introduction. Constraint Index values were calculated from gas chromatographic data using methods known in the art.

| Example No. | C.I. | Conversion at 10 min. | Temp. °C |
|---|---|---|---|
| 4 | 0.5 | 5% | 427 |

## Claims

1. A zeolite having a mole ratio of an oxide selected from silicon oxide, germanium oxide and mixtures thereof to an oxide selected from aluminium oxide, gallium oxide, iron oxide, boron oxide and mixtures thereof greater than 100 : 1, and having a crystalline structure whose X-ray powder diffraction pattern shows the following characteristic lines :

| 2 θ | d/n | I (Intensity) |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

2. A zeolite having a composition, as synthesized and in the anhydrous state, in terms of mole ratios of oxides as follows : (0.1 to 10) $Q_2O$ : (0.1 to 5.0)$M_2O$ : $W_2O_3$ : – (greater than 100) $YO_2$ wherein M is an alkali metal cation, W is selected from aluminum, gallium, iron, boron and mixtures thereof, Y is selected from silicon, germanium and mixtures thereof, Q is an adamantane quaternary ammonium ion and having crystalline structure whose X-ray powder diffraction pattern shows the following characteristic lines :

| 2 θ | d/n | I (Intensity) |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

3. The zeolite according to Claim 1 or 2 wherein W is aluminum and Y is silicon.

4. A zeolite prepared by thermally treating the zeolite of Claim 3 at a temperature from 200°C to 820°C.

5. A zeolite according to Claim 2 wherein the adamantane quaternary ammonium ion is derived from an adamantane compound of the formula :

(a)

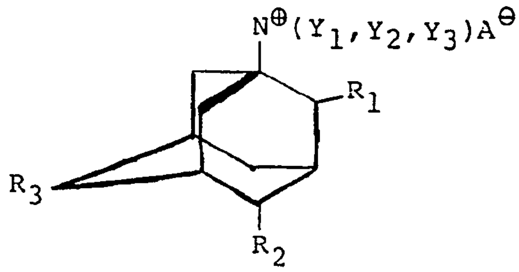

wherein each of $Y_1$ $Y_2$ and $Y_3$ independently is lower alkyl and $A^\ominus$ is an anion which is not detrimental to the formation of the zeolite ; and each of $R_1$, $R_2$ and $R_3$ independently is hydrogen, or lower alkyl ; or

(b)

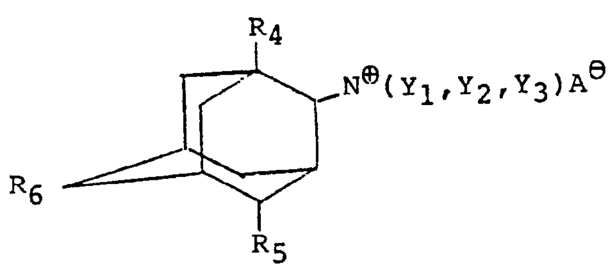

wherein each of $R_4$, $R_5$ and $R_6$ independently is hydrogen or lower alkyl ; each of $Y_1$, $Y_2$ and $Y_3$ independently is lower alkyl ; and $A^\ominus$ is an anion which is not detrimental to the formation of the zeolite.

6. A zeolite according to Claim 5 wherein in formula (a) each of $Y_1$, $Y_2$ and $Y_3$ independently is methyl or ethyl ; $A^\ominus$ is OH or halogen ; and each of $R_1$, $R_2$, and $R_3$ is hydrogen ; and in formula (b) each of $Y_1$, $Y_2$ and $Y_3$ independently is methyl or ethyl ; $A^\ominus$ is OH, or halogen ; and each of $R_4$, $R_5$ and $R_6$ is hydrogen.

7. A zeolite according to Claim 6 wherein $Y_1$, $Y_2$ and $Y_3$ are the same and each is methyl ; and $A^\ominus$ is OH, Cl or I.

8. A zeolite according to Claim 1 or 2 which has undergone ion exchange with hydrogen, ammonium, rare earth metal, Group IIA metal, or Group VIII metal ions.

9. A zeolite according to Claim 1 or 2 wherein rare earth metals, Group IIA metals, or Group VIII metals are occluded in the zeolite.

10. A zeolite composition, comprising the zeolite of Claim 1 or 2 and an inorganic matrix.

11. A method for preparing the zeolite of Claim 1, comprising :

(a) preparing an aqueous mixture containing sources of an alkali metal oxide, an adamantane quaternary ammonium ion wherein the adamantane quaternary ammonium ion is derived from an adamantane compound of the formula :

(a) 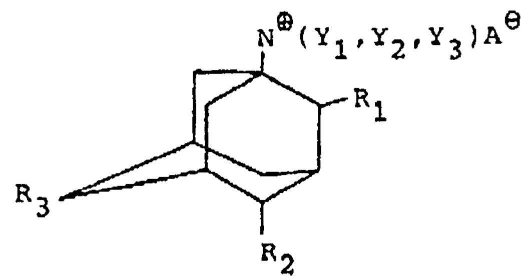

wherein each of $Y_1$, $Y_2$ and $Y_3$ independently is lower alkyl and $A^{\ominus}$ is an anion which is not detrimental to the formation of the zeolite ; and each of $R_1$, $R_2$ and $R_3$ independently is hydrogen, or lower alkyl ; or

(b) 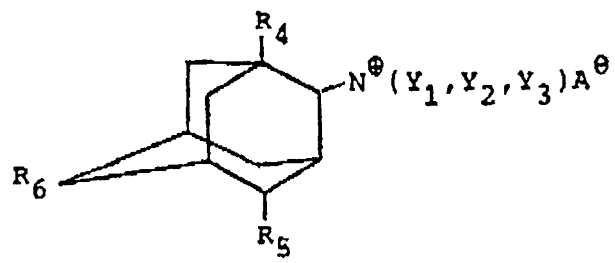

wherein each of $R_4$, $R_6$ and $R_6$ independently is hydrogen or lower alkyl ; each of $Y_1$, $Y_2$ and $Y_3$ independently is lower alkyl ; and $A^{\ominus}$ is an anion which 16 not detrimental to the formation of the zeolite, an oxide selected from aluminum oxide, gallium oxide, iron oxide, boron oxide and mixtures thereof, and an oxide selected from silicon oxide, germanium oxide, and mixtures thereof wherein the reaction mixture has a composition in terms of mole ratios of oxides falling in the ranges :

| | |
|---|---|
| $YO_2/W_2O_3$ | 50-∞ |
| $OH^-/YO_2$ | 0.10-1.0 |
| $Q/YO_2$ | 0.05-0.50 |
| $M^+/YO_2$ | 0.05-0.30 |
| $H_2O/YO_2$ | 20-300 |
| $Q/Q+M^+$ | 0.30-0.70 ; |

wherein Q is an adamantane quaternary ammonium ion, Y is silicon, germanium and mixtures thereof, W is aluminum, gallium, iron, boron and mixtures thereof, and M is an alkali metal ;

(b) maintaining the mixture at a temperature of at least 140°C until the crystals of said zeolite form ; and

(c) recovering said crystals.

12. A method according to Claim 11 wherein in formula (a) each of $Y_1$, $Y_2$ and $Y_3$ independently is methyl or ethyl, $A^{\ominus}$ is OH or halogen ; and each of $R_1$, $R_2$ and $R_3$ is hydrogen ; and in formula (b) each of $Y_1$, $Y_2$ and $Y_3$ independently is methyl or ethyl ; $A^{\ominus}$ is OH, or halogen ; and each of $R_4$, $R_6$ and $R_6$ is hydrogen.

13. A method according to Claim 12 wherein $Y_1$, $Y_2$ and $Y_3$ are the same and each is methyl ; and $A^{\ominus}$ it OH, or I.

14. A method for preparing the zeolite of Claim 1, comprising :

(a) preparing an aqueous mixture containing sources of an alkali metal oxide, an adamantane quaternary ammonium ion wherein the adamantane quaternary ammonium ion is derived from an adamantane com-

pound of the formula :

(a)

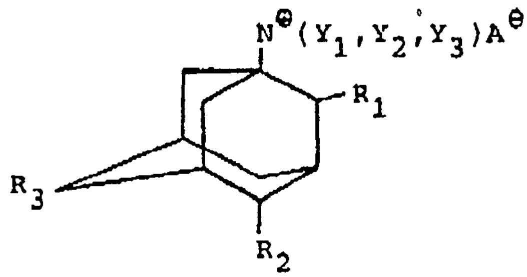

wherein each of $Y_1$, $Y_2$ and $Y_3$ independently is lower alkyl and $A^{\ominus}$ is an anion which is not detrimental to the formation of the zeolite, and each of $R_1$, $R_2$ and $R_3$ independently is hydrogen, or lower alkyl ; or

(b)

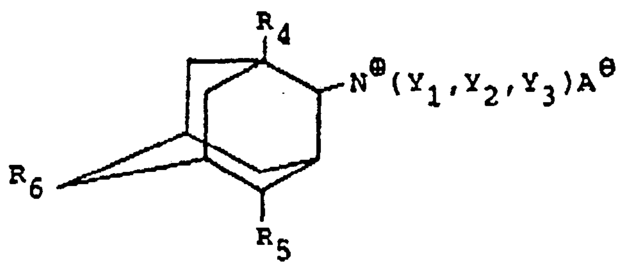

wherein each of $R_4$, $R_5$ and $R_6$ independently is hydrogen or lower alkyl ; each of $Y_1$, $Y_2$ and $Y_3$ independently is lower alkyl ; and $A^{\ominus}$ is an anion which is not detrimental to the formation of the zeolite, an oxide selected from aluminum oxide, gallium oxide, iron oxide, boron oxide and mixtures thereof, and an oxide selected from silicon oxide, germanium oxide, and mixtures thereof wherein the reaction mixture has a composition in terms of mole ratios of oxides falling in the ranges :

| | |
|---|---|
| $YO_2/W_2O_3$ | 50-∞ |
| $OH^-/YO_2$ | 0.20-0.30 |
| $Q/YO_2$ | 0.10-0.20 |
| $M^+/YO_2$ | 0.05-0.15 |
| $H_2O/YO_2$ | 35-60 |
| $Q/Q+M^+$ | 0.40-0.60 ; |

wherein Q is an adamantane quaternary ammonium ion, Y is silicon, germanium and mixtures thereof, W is aluminum, gallium, iron, boron and mixtures thereof, and M is an alkali metal ;
(b) maintaining the mixture at a temperature of at least 140°C until the crystals of said zeolite form ; and
(c) recovering said crystals.

## Ansprüche

1. Zeolith mit einem Molverhältnis eines aus Siliciumoxid, Germaniumoxid und Gemischen davon ausgewählten Oxids zu einem aus Aluminiumoxid, Galliumoxid, Eisenoxid, Boroxid und Gemischen davon ausgewählten Oxids von größer als 100 : 1 und einer kristallinen Struktur, deren Röntgen-Pulver-Diagramm die folgenden charakteristischen Linien aufweist :

| 2 θ | d/n | I (Intensität) |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

2. Zeolith mit einer Zusammensetzung, synthetisiert und in wasserfreiem Zustand, hinsichtlich der Oxid-Molverhältnisse von wie folgt : (0,1 bis 10)$Q_2O$ : (0,1 bis 5,0)$M_2O$ : $W_2O_3$ : (größer als 100) $YO_2$, wobei M ein Alkalimetall-Kation ist, W aus Aluminium, Gallium, Eisen, Bor und Gemischen davon ausgewählt ist, Y aus Silicium, Germanium und Gemischen davon ausgewählt ist, Q ein Adamantan-quartäres Ammoniumion ist, und einer kristallinen Struktur, deren Röntgen-Pulver-Diagramm die folgenden charakteristischen Linien aufweist:

| 2 θ | d/n | I (Intensität) |
|---|---|---|
| 7.50 | 11.79 | 82 |
| 13.00 | 6.89 | 8 |
| 15.00 | 5.91 | 39 |
| 19.91 | 4.46 | 84 |
| 21.42 | 4.15 | 30 |
| 22.64 | 3.93 | 73 |
| 25.13 | 3.54 | 3 |
| 26.16 | 3.41 | 37 |
| 29.37 | 3.04 | 11 |
| 30.31 | 2.949 | 25 |
| 34.07 | 2.631 | 4 |
| 34.86 | 2.574 | 17 |
| 37.41 | 2.404 | 3 |
| 38.29 | 2.351 | 6 |

3. Zeolith nach Anspruch 1 oder 2, bei dem W Aluminium und Y Silicium ist.

4. Zeolith, hergestellt durch Wärmebehandlung des Zeoliths nach Anspruch 3 bei einer Temperatur von 200°C bis 820°C.

5. Zeolith nach Anspruch 2, bei dem das Adamantan-quartäre Ammoniumion von einer Adamantan-Verbindung der Formel :

(a)

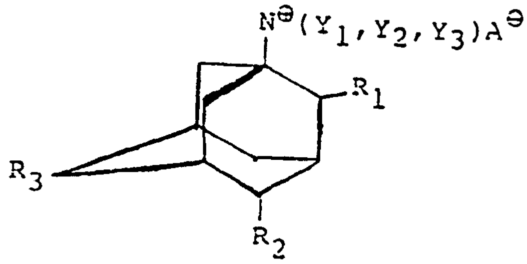

,

in der $Y_1$, $Y_2$ und $Y_3$ jeweils unabhängig voneinander ein Niederalkylrest ist, $A^{\ominus}$ ein die Bildung des Zeoliths nicht störendes Anion ist und $R_1$, $R_2$ und $R_3$ jeweils unabhängig voneinander Wasserstoff oder ein Niederalkylrest ist; oder der Formel:

(b)

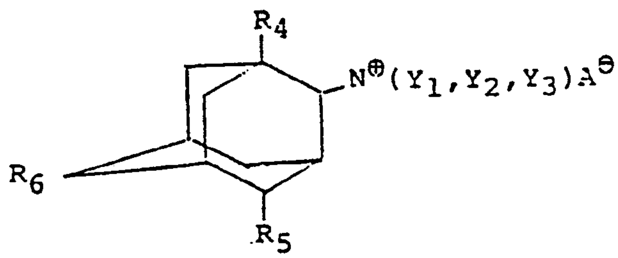

abstammt, in der $R_4$, $R_5$ und $R_6$ jeweils unabhängig voneinander Wasserstoff oder ein Niederalkylrest ist, $Y_1$, $Y_2$ und $Y_3$ jeweils unabhängig voneinander ein Niederalkylrest ist und $A^{\ominus}$ ein die Bildung des Zeoliths nicht störendes Anion ist.

6. Zeolith nach Anspruch 5, bei dem in Formel (a) $Y_1$, $Y_2$ und $Y_3$ jeweils unabhängig voneinander Methyl oder Ethyl ist, $A^{\ominus}$ OH oder Halogen ist und $R_1$, $R_2$ und $R_3$ jeweils Wasserstoff ist, und in Formel (b) $Y_1$, $Y_2$ und $Y_3$ jeweils unabhängig voneinander Methyl oder Ethyl ist, $A^{\ominus}$ OH oder Halogen ist und $R_4$, $R_6$ und $R_6$ jeweils Wasserstoff ist.

7. Zeolith nach Anspruch 6, bei dem $Y_1$, $Y_2$ und $Y_3$ gleich sind und jeweils Methyl ist und $A^{\ominus}$ OH, Cl oder I ist.

8. Zeolith nach Anspruch 1 oder 2, das einem Ionenaustausch mit Wasserstoff-, Ammonium-, seltenen Erdmetall-, Gruppe IIA Metall- oder Gruppe VIII Metallionen unterzogen worden ist.

9. Zeolith nach Anspruch 1 oder 2, bei dem seltene Erdmetalle, Gruppe IIA Metalle oder Gruppe VIII Metalle im Zeolith eingeschlossen sind.

10. Zeolith-Zusammensetzung, umfassend das Zeolith nach Anspruch 1 oder 2 und eine anorganische Matrix.

11. Verfahren zur Herstellung des Zeoliths nach Anspruch 1, umfassend:

(a) Herstellung eines wässrigen Gemisches, enthaltend Quellen eines Alkalimetalloxids, eines Adamantan-quartären Ammoniumions, wobei das Adamantan-quartäre Ammoniumion von einer Adamantan-Verbindung der Formel

(a)

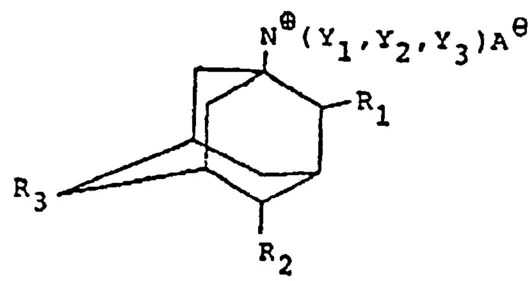

,

in der $Y_1$, $Y_2$ und $Y_3$ jeweils unabhängig voneinander ein Niederalkylrest ist, $A^{\ominus}$ ein die Bildung des Zeoliths nicht störendes Anion ist und $R_1$, $R_2$ und $R_3$ jeweils unabhängig voneinander Wasserstoff oder ein Niederalkylrest ist, oder der Formel

(b) 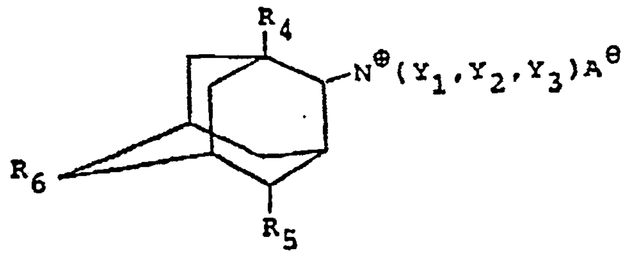

abstammt, in der $R_4$, $R_5$ und $R_6$ jeweils unabhängig voneinander Wasserstoff oder ein Niederalkylrest ist, $Y_1$, $Y_2$ und $Y_3$ jeweils unabhängig voneinander ein Niederalkylrest ist und $A^{\ominus}$ ein die Bildung des Zeoliths nicht störendes Anion ist,
eines aus Aluminiumoxid, Galliumoxid, Eisenoxid, Boroxid und Gemischen davon ausgewählten Oxids und eines aus Siliciumoxid, Germaniumoxid und Gemischen davon ausgewählten Oxids, wobei das Reaktionsgemisch eine Zusammensetzung hinsichtlich der Oxid-Molverhältnisse folgender Bereiche

| | |
|---|---|
| $YO_2/W_2O_3$ | 50-∞ |
| $OH^-/YO_2$ | 0.10-1.0 |
| $Q/YO_2$ | 0.05-0.50 |
| $M^+/YO_2$ | 0.05-0.30 |
| $H_2O/YO_2$ | 20-300 |
| $Q/Q+M^+$ | 0.30-0.70 |

aufweist, wobei Q ein Adamantan-quartäres Ammoniumion ist, Y Silicium, Germanium und Gemische davon ist, W Aluminium, Gallium, Eisen, Bor und Gemische davon ist und M ein Alkalimetall ist,
(b) Halten des Gemisches bei einer Temperatur von mindestens 140°C bis sich die Kristalle des Zeoliths ausbilden und
(c) Gewinnung der Kristalle.

12. Verfahren nach Anspruch 11, bei dem in Formel (a) $Y_1$, $Y_2$ und $Y_3$ jeweils unabhängig voneinander Methyl oder Ethyl ist, $A^{\ominus}$ OH oder Halogen ist und $R_1$, $R_2$ und $R_3$ jeweils Wasserstoff ist, und in Formel (b) $Y_1$, $Y_2$ und $Y_3$ jeweils unabhängig voneinander Methyl oder Ethyl ist, $A^{\ominus}$ OH oder Halogen ist und $R_4$, $R_5$ und $R_6$ jeweils Wasserstoff ist.

13. Verfahren nach Anspruch 12, bei dem $Y_1$, $Y_2$ und $Y_3$ gleich sind und jeweils Methyl ist und $A^{\ominus}$ OH oder I ist.

14. Verfahren zur Herstellung des Zeoliths nach Anspruch 1, umfassend :
(a) Herstellung eines wässrigen Gemisches, enthaltend Quellen eines Alkalimetalloxids, eines Adamantan-quartären Ammoniumions, wobei das Adamantan-quartäre Ammoniumion von einer Adamantan-Verbindung der Formel :

(a) 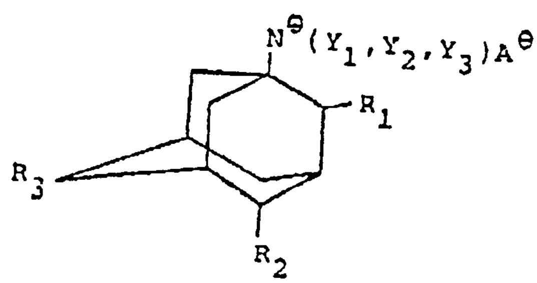

in der $Y_1$, $Y_2$ und $Y_3$ jeweils unabhängig voneinander ein Niederalkylrest ist, $A^{\ominus}$ ein die Bildung des Zeoliths nicht störendes Anion ist und $R_1$, $R_2$ und $R_3$ jeweils unabhängig voneinander Wasserstoff oder ein Niederalkylrest ist, oder der Formel

(b) 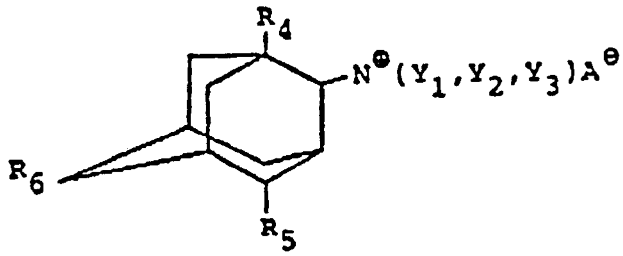

abstammt, in der $R_4$, $R_5$ und $R_6$ jeweils unabhängig voneinander Wasserstoff oder ein Niederalkylrest ist, $Y_1$, $Y_2$ und $Y_3$ jeweils unabhängig voneinander ein Niederalkylrest ist und $A^\ominus$ ein die Bildung des Zeoliths nicht störendes Anion ist,
eines aus Aluminiumoxid, Galliumoxid, Eisenoxid, Boroxid und Gemischen davon ausgewählten Oxids und eines aus Siliciumoxid, Germaniumoxid und Gemischen davon ausgewählten Oxids, wobei das Reaktionsgemisch eine Zusammensetzung hinsichtlich der Oxid-Molverhältnisse folgender Bereiche

| | |
|---|---|
| $YO_2/W_2O_3$ | 50-∞ |
| $OH^-/YO_2$ | 0.20-0.30 |
| $Q/YO_2$ | 0.10-0.20 |
| $M^+/YO_2$ | 0.05-0.15 |
| $H_2O/YO_2$ | 35-60 |
| $Q/Q+M^+$ | 0.40-0.60 |

aufweist, wobei Q ein Adamantan-quartäres Ammoniumion ist, Y Silicium, Germanium und Gemische davon ist, W Aluminium, Gallium, Eisen, Bor und Gemische davon ist und M ein Alkalimetall ist,
(b) Halten des Gemisches bei einer Temperatur von mindestens 140°C bis sich die Kristalle des Zeoliths ausbilden und
(c) Gewinnung der Kristalle.

## Revendications

1. Zéolite ayant un rapport molaire d'un oxyde choisi entre l'oxyde de silicium, l'oxyde de germanium et leurs mélanges à un oxyde choisi entre l'oxyde d'aluminium, l'oxyde de gallium, l'oxyde de fer, l'oxyde de bore et leurs mélanges supérieur à 100 : 1, et ayant une structure cristalline dont le diagramme de diffraction des rayons X sur poudre présente les raies caractéristiques suivantes :

| 2 θ | d/n | I (intensité) |
|---|---|---|
| 7,50 | 11,79 | 82 |
| 13,00 | 6,89 | 8 |
| 15,00 | 5,91 | 39 |
| 19,91 | 4,46 | 84 |
| 21,42 | 4,15 | 30 |
| 22,64 | 3,93 | 73 |
| 25,13 | 3,54 | 3 |
| 26,16 | 3,41 | 37 |
| 29,37 | 3,04 | 11 |
| 30,31 | 2,949 | 25 |
| 34,07 | 2,631 | 4 |
| 34,86 | 2,574 | 17 |
| 37,41 | 2,404 | 3 |
| 38,29 | 2,351 | 6 |

2. Zéolite ayant une composition, telle qu'obtenue par synthèse et à l'état anhydre, exprimée par les rapports molaires des oxydes suivants : (0,1 à 10)$Q_2O$ : (0,1 à 5,0)$M_2O$ : $W_2O_3$ : (plus de 100)$YO_2$, dans laquelle M représente un cation de métal alcalin, W est choisi entre l'aluminium, le gallium, le fer, le bore et leurs mélanges, Y est choisi entre le silicium, le germanium et leurs mélanges, Q est un ion ammonium quaternaire à cycle adamantane, et ayant une structure cristalline dont le diagramme de diffraction des rayons X sur poudre présente les raies caractéristiques suivantes :

| 2 θ | d/n | I (intensité) |
|---|---|---|
| 7,50 | 11,79 | 82 |
| 13,00 | 6,89 | 8 |
| 15,00 | 5,91 | 39 |
| 19,91 | 4,46 | 84 |
| 21,42 | 4,15 | 30 |
| 22,64 | 3,93 | 73 |
| 25,13 | 3,54 | 3 |
| 26,16 | 3,41 | 37 |
| 29,37 | 3,04 | 11 |
| 30,31 | 2,949 | 25 |
| 34,07 | 2,631 | 4 |
| 34,86 | 2,574 | 17 |
| 37,41 | 2,404 | 3 |
| 38,29 | 2,351 | 6 |

3. Zéolite suivant la revendication 1 ou 2, dans laquelle W représente l'aluminium et Y représente le silicium.

4. Zéolite préparée par traitement thermique de la zéolite suivant la revendication 3 à une température de 200°C à 820°C.

5. Zéolite suivant la revendication 2, dans laquelle l'ion ammonium quaternaire à cycle adamantane est obtenu à partir d'un dérivé d'adamantane de formule :

(a) 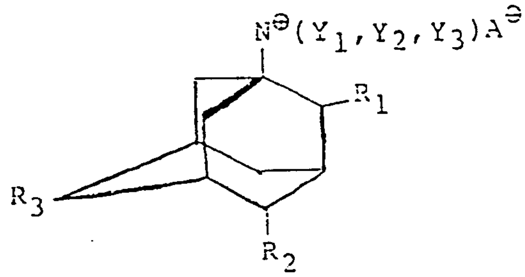

dans laquelle chacun des groupes $Y_1$, $Y_2$ et $Y_3$ représente, indépendamment, un groupe alkyle inférieur et $A^{\ominus}$ représente un anion qui n'est pas néfaste pour la formation de la zéolite ; et chacun des groupes $R_1$, $R_2$ et $R_3$ représente, indépendamment, l'hydrogène ou un groupe alkyle inférieur ; ou

(b) 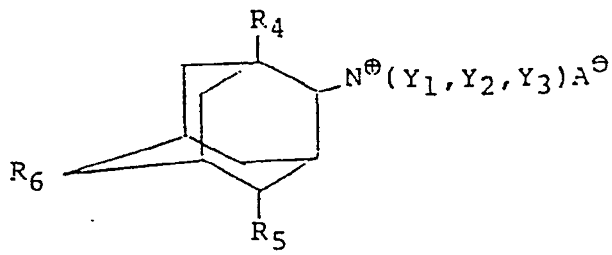

dans laquelle chacun des groupes $R_4$, $R_5$ et $R_6$ représente, indépendamment, l'hydrogène ou un groupe alkyle inférieur ; chacun des groupes $Y_1$, $Y_2$ et $Y_3$ représente, indépendamment, un groupe alkyle inférieur ; et $A^{\ominus}$ représente un anion qui n'est pas néfaste pour la formation de la zéolite.

6. Zéolite suivant la revendication 5, dans laquelle, dans la formule (a), chacun des groupes $Y_1$, $Y_2$ et $Y_3$ représente, indépendamment, un groupe méthyle ou éthyle ; $A^{\ominus}$ représente un groupe OH ou un halogène ; et chacun des groupes $R_1$, $R_2$ et $R_3$ représente l'hydrogène ; et, dans la formule (b), chacun des groupes $Y_1$, $Y_2$ et $Y_3$ représente, indépendamment, un groupe méthyle ou éthyle ; $A^{\ominus}$ représente un groupe OH ou un halogène ; et chacun des groupes $R_4$, $R_5$ et $R_6$ représente l'hydrogène.

7. Zéolite suivant la revendication 6, dans laquelle $Y_1$, $Y_2$ et $Y_3$ sont identiques et représentent chacun un groupe méthyle ; et $A^{\ominus}$ représente un groupe OH, Cl ou I.

8. Zéolite suivant la revendication 1 ou 2, qui a subi un échange d'ions avec des ions hydrogène, des ions ammonium, des ions d'un métal faisant partie des terres rares, des ions d'un métal du Groupe IIA ou des ions d'un métal du Groupe VIII.

9. Zéolite suivant la revendication 1 ou 2, dans laquelle les métaux faisant partie des terres rares, les métaux du Groupe IIA ou les métaux du Groupe VIII sont occlus dans la zéolite.

10. Composition zéolitique, comprenant la zéolite suivant la revendication 1 ou 2 et une matrice inorganique.

11. Procédé de préparation de la zéolite suivant la revendication 1, consistant :

(a) à préparer un mélange aqueux contenant des sources d'un oxyde de métal alcalin, d'un ion ammonium quaternaire à cycle adamantane, dans lequel l'ion ammonium quaternaire à cycle adamantane est obtenu à partir d'un dérivé d'adamantane de formule :

(a) 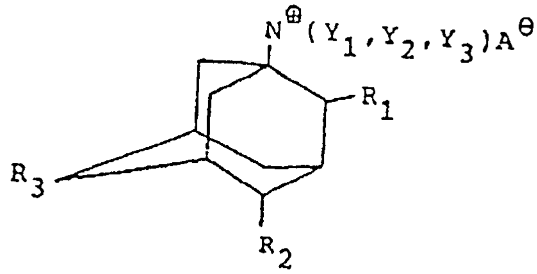

dans laquelle chacun des groupes $Y_1$, $Y_2$ et $Y_3$ représente, indépendamment, un groupe alkyle inférieur et $A^{\ominus}$ représente un anion qui n'est pas néfaste pour la formation de la zéolite ; et chacun des groupes $R_1$, $R_2$ et $R_3$ représente, indépendamment, l'hydrogène ou un groupe alkyle inférieur ; ou

(b) 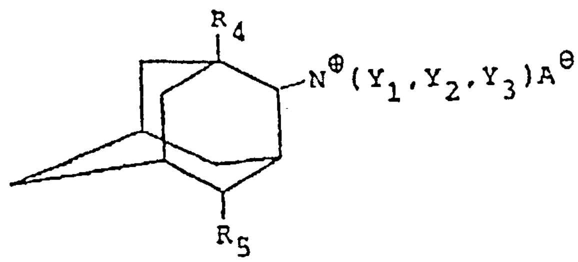

dans laquelle chacun des groupes $R_4$, $R_5$ et $R_6$ représente, indépendamment, l'hydrogène ou un groupe alkyle inférieur ; chacun des groupes $Y_1$, $Y_2$ et $Y_3$ représente, indépendamment, un groupe alkyle inférieur; et $A^{\ominus}$ représente un anion qui n'est pas néfaste pour la formation de la zéolite, un oxyde choisi entre l'oxyde d'aluminium, l'oxyde de gallium, l'oxyde de fer, l'oxyde de bore et leurs mélanges, et un oxyde choisi entre l'oxyde de silicium, l'oxyde de germanium et leurs mélanges, le mélange réactionnel possédant une composition exprimée par les rapports molaires des oxydes compris dans les intervalles :

| | |
|---|---|
| $YO_2/W_2O_3$ | 50-∞ |
| $OH^-/YO_2$ | 0,10 - 1,0 |
| $Q/YO_2$ | 0,05 - 0,50 |
| $M^+/YO_2$ | 0,05 - 0,30 |
| $H_2O/YO_2$ | 20 - 300 |
| $Q/Q+M^+$ | 0,30 - 0,70 ; |

dans lesquels Q représente un ion ammonium quaternaire à cycle adamantane, Y représente le silicium, le germanium ou un de leurs mélanges, W représente l'aluminium, le gallium, le fer, le bore ou un de leurs mélanges, et M représente un métal alcalin ;

(b) à maintenir le mélange à une température d'au moins 140°C jusqu'à formation des cristaux de ladite zéolite ; et

(c) à séparer lesdits cristaux.

12. Procédé suivant la revendication 11, dans lequel, dans la formule (a), chacun des groupes $Y_1$, $Y_2$ et $Y_3$ représente, indépendamment, un groupe méthyle ou éthyle ; $A^{\ominus}$ représente un groupe OH ou un halogène; et chacun des groupes $R_1$, $R_2$ et $R_3$ représente l'hydrogène ; et, dans la formule (b), chacun des groupes $Y_1$, $Y_2$ et $Y_3$ représente, indépendamment, un groupe méthyle ou éthyle ; $A^{\ominus}$ représente un groupe OH ou un halogène ; et chacun des groupes $R_4$, $R_5$ et $R_6$ représente l'hydrogène.

13. Procédé suivant la revendication 12, dans lequel $Y_1$, $Y_2$ et $Y_3$ sont identiques et représentent chacun un groupe méthyle ; et $A^{\ominus}$ représente un groupe OH ou I.

14. Procédé de préparation de la zéolite suivant la revendication 1, consistant :

(a) à préparer un mélange aqueux contenant des sources d'un oxyde de métal alcalin, d'un ion ammonium quaternaire à cycle adamantane, l'ion ammonium quaternaire à cycle adamantane étant obtenu à partir d'un dérivé d'adamantane de formule :

(a)

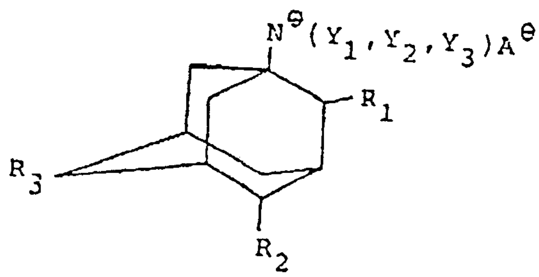

dans laquelle chacun des groupes $Y_1$, $Y_2$ et $Y_3$ représente, indépendamment, un groupe alkyle inférieur et $A^\ominus$ représente un anion qui n'est pas néfaste pour la formation de la zéolite ; et chacun des groupes $R_1$, $R_2$ et $R_3$ représente, indépendamment, l'hydrogène ou un groupe alkyle inférieur ; ou

(b)

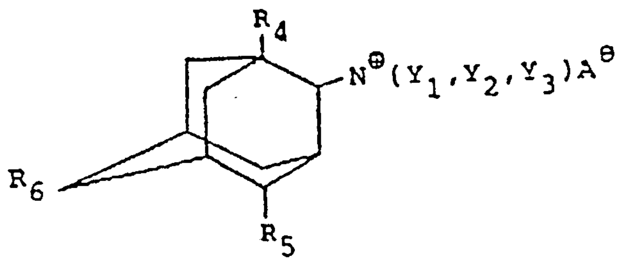

dans laquelle chacun des groupes $R_4$, $R_5$ et $R_6$ représente, indépendamment, l'hydrogène ou un groupe alkyle inférieur ; chacun des groupes $Y_1$, $Y_2$ et $Y_3$ représente, indépendamment, un groupe alkyle inférieur; et $A^\ominus$ représente un anion qui n'est pas néfaste pour la formation de la zéolite, un oxyde choisi entre l'oxyde d'aluminium, l'oxyde de gallium, l'oxyde de fer, l'oxyde de bore et leurs mélanges, et un oxyde choisi entre l'oxyde de silicium, l'oxyde de germanium et leurs mélanges, dans lequel le mélange réactionnel possède une composition exprimée par les rapports molaires des oxydes compris dans les intervalles :

| | |
|---|---|
| $YO_2/W_2O_3$ | 50-∞ |
| $OH^-/YO_2$ | 0,20 - 0,30 |
| $Q/YO_2$ | 0,10 - 0,20 |
| $M^+/YO_2$ | 0,05 - 0,15 |
| $H_2O/YO_2$ | 35 - 60 |
| $Q/Q+M^+$ | 0,40 - 0,60 ; |

dans lesquels Q représente un ion ammonium quaternaire à cycle adamantane, Y représente le silicium, le germanium ou un de leurs mélanges, W représente l'aluminium, le gallium, le fer, le bore ou un de leurs mélanges, et M représente un métal alcalin ;

(b) à maintenir le mélange à une température d'au moins 140°C jusqu'à formation des cristaux de ladite zéolite ; et

(c) à séparer lesdits cristaux.